# EUROPEAN PATENT APPLICATION

(11) **EP 2 506 505 A1**
(43) Date of publication of application: **03.10.2012**
(21) Application number: 10833114.1
(22) Date of filing: 18.11.2010
(51) Int. Cl.: H04L 12/56

(54) **LOAD DISTRIBUTION SYSTEM, LOAD DISTRIBUTION METHOD, AND PROGRAM**

(30) Priority: 26.11.2009 JP 2009269005
(71) Applicant: NEC Corporation, Tokyo 108-8001 (JP)
(72) Inventor: KATO Takeshi, Tokyo 108-8001 (JP)
(74) Representative: Vossius & Partner
(86) International application number: PCT/JP2010/070527
(87) International publication number: WO 2011/065268

(57) **Abstract**

A load distribution of controllers is made possible in a combination of a switch and a controller which do not have a load distribution function independently, and in a combination of the switch and the controller that do not have a compatibility in the load distribution function due to a difference of makers. Specifically, in a system which controls a data flow flowing through the network by dynamically setting a delivery route of a packet to switches in the network by the controllers such as a server, the master controller is determined to the switch while notifying a connection from the switch to the plurality of controllers, by a proxy provided between the switch and the controller, and an inquiry message from the switch is transferred only to the master controller. A route data registration message is transmitted to the proxy from the master controller in response to the inquiry message from the switch. The route data registration message is transferred to all the switches which are dealt with the notice from the proxy.

## Description

### Technical Field

The present invention is related to a load distribution system, and especially, to a load distribution system in which controllers for monitoring and controlling switches exist in a network.

### Background Art

For example, a technique which controls a data flow flowing through a network by monitoring and controlling switches in the network by a controller such as a server is one of the opened network techniques, and the technique suits the control of a large-scale network.

In the above technique, it is necessary for control of the network that all the switches belonging to the network are under the management of one controller. Therefore, as the scale of network becomes large, the load of the data flow control centers on the controller. Moreover, various application programs such as a network monitoring tool would operate on the controller. Therefore, the load for the processing of the controller itself would increases.

There is not a mechanism to control the load of the controller in the above-mentioned technique. When the mechanism to control the load of the controller is installed independently, the predominance of using the opened network technique is lost.

Also, in the above-mentioned technique, because one controller controls all the switches, the controller can flexibly deal with a fault of the switch. However, when the fault has occurred in the controller, all the switches cannot be controlled.

On the other hand, when trying to manage the network by a plurality of controllers, the design of the network and corresponding software programs becomes complicated due to the compatibility and the synchronization in the configuration of only the switches and controllers.

As one of the related techniques, JP 2007-288711A (Patent Literature 1) discloses a gateway apparatus, a setting controller, a load distribution method of the gateway apparatus, and a program. In this related technique, the gateway apparatus has a function of absorbing a difference between networks (NW) in operation policy by carrying out the processing to a packet which is exchanged between the networks (NW), based on a policy set by a gateway controller (GC). This gateway apparatus is provided with the setting controller, two distribution routers, two switching hubs and a plurality of session border controllers (SBCs).

Also, a transfer destination determination processing apparatus is disclosed in Japanese Patent No. 3409726 (Patent Literature 2). In this related technique, when extracting flow identification data and a destination IP address from a received IP (Internet Protocol) datagram, a flow control section refers to only an aggregation flow table to determine a transfer path (P), when inputting a multipath number (N) and the flow identification data (F), in case that a destination of the IP datagram is set as a multipath.

Also, JP 2008-539643A (Patent Literature 3) discloses a method of establishing a secure communication between a plurality of network elements in the communication network. In this related technique, a secure channel SC is provided between a gateway and a host. In addition, another secure channel SC is provided between an access controller and the gateway. In this related technique, the secure peer-to-peer communication is established by the host through the gateway.

### Citation List

[Patent Literature 1] JP 2007-288711A
[Patent Literature 2] Japanese Patent No. 3409726
[Patent Literature 3] JP 2008-539643A
[Non-Patent Literature 1]
   "The OpenFlow Switch Consortium"
   <http://www.openflowswitch.org/>
[Non-Patent Literature 2]
   "OpenFlow Switch Specification Version 0.9.0 (Wire Protocol 0x98) July 20, 2009 Current Maintainer: Brandon Heller (brandonh@Stanford.edu)"
   <http://www.openflowswitch.org/documents/openflow-spec-v0.9.0.pdf>

### Summery of the Invention

In a system which controls a data flow flowing through a network by dynamically setting a delivery route of a packet to switches in the network by controllers such as a server, a proxy is provided between the switches and the controller to relay data defined in a protocol. The proxy is viewed as a single controller from the switches and operates as if it is connected with all the switches in the network.

The load distribution system of the present invention is provided with switches, controllers and a proxy. The switches configure a network. The controller sets a route to the switches. The proxy notifies a connection from one of the switches to the plurality of controllers and transfers an inquiry message from the switch to one of the controllers as a master controller.

In the load distribution method of the present invention, the controller sets a route to the switches which configure a network. Also, the proxy notifies a connection from one switch to the plurality of controllers. Also, the proxy transfers an inquiry message from the switch to one of the controllers as a master controller.

A program according to the present invention is a program which is executed by the proxy installed between the switches which configure the network and the controllers which set a route to the switches. This program includes a step of notifying a connection from one switch to the plurality of controllers, and a step of transferring an inquiry message from the switches to one of the controllers as a master. It should be noted that the program according to the present invention can be stored in a storage unit and a storage medium.

In the system which controls the data flow flowing through the network by dynamically setting the delivery route of the packet to the switches in the network by the controllers such as the server, the load distribution by the controller becomes possible by introducing the proxy, in a combination of the switches and the controller which do not have a load distribution function independently, and in a combination of the switches and the controller which do not compatibility in the load distribution function due to a difference in a maker.

### Brief Description of the Drawings

FIG. 1 is a diagram showing a configuration example of a load distribution system of the present invention;
FIG. 2 is a block diagram showing a configuration example of a proxy according to a first exemplary embodiment of the present invention;
FIG. 3 is a flow chart showing an operation (initialization) in case of the start of a switch;
FIG. 4 is a diagram showing the outline of initialization;
FIG. 5 is a diagram showing an example of correspondence relation with a master controller determined every switch;
FIG. 6 is a flow chart showing an operation of the routing control;
FIG. 7 is a diagram showing the outline of the flow registration;
FIG. 8 is a block diagram showing a configuration example of a proxy according to a second exemplary embodiment of the present invention; and
FIG. 9 is a diagram showing an example of correspondence relation between the switch and the master controller after fault occurrence.

### Description of Exemplary Embodiments

In the present invention, as a technique which controls a data flow which flows through a network by monitoring and controlling switches in the network by controllers such as a server, an example of an Open flow (OpenFlow) technique will be described. However, actually, the present invention is not limited to the open flow technique.

The open flow technique is a technique that a controller sets data of a multi-layer and route data (a flow table) in units of flows to the switches according to flow definition data (flow: rule + action) set to by itself as a routing policy, and carries out a routing control and a node control. In the open flow technique, the controller monitors the switches in the network and dynamically sets a delivery route of a packet to the switches in the network according to a communication situation. Thus, a routing control function is separated from a router and a switch, and the optimal routing and the traffic management become possible through the centralized control by the controller. The switches to which the open flow technique is applied deal with communication not in unit of packets or frames like a conventional router and switch but in units of flows.

A flow table is a table storing an entry in which processing (action) to be carried out to the packet matching to a predetermined matching condition (rule) is defined. A packet group (a packet series) which matches to the rule is called a flow. The rule of a flow is defined as either of a destination address, a source address, a destination port number, and a source port number, which are contained in a header field of each protocol hierarchy of the packet or as various combinations of them, and is distinguishable. It should be noted that it is supposed that the above-mentioned addresses contains a MAC address (Media Access Control Address) and an IP address (Internet Protocol Address). Also, data of an entrance port (Ingress Port) is practicable as the rule of the flow in addition to the above.

For the details of the open flow technique, it is described in Non-Patent Literature 1 and Non-Patent Literature 2.

### [First Exemplary Embodiment]

The first exemplary embodiment of the present invention will be described with reference to the attached drawings.

### (Configuration of whole system)

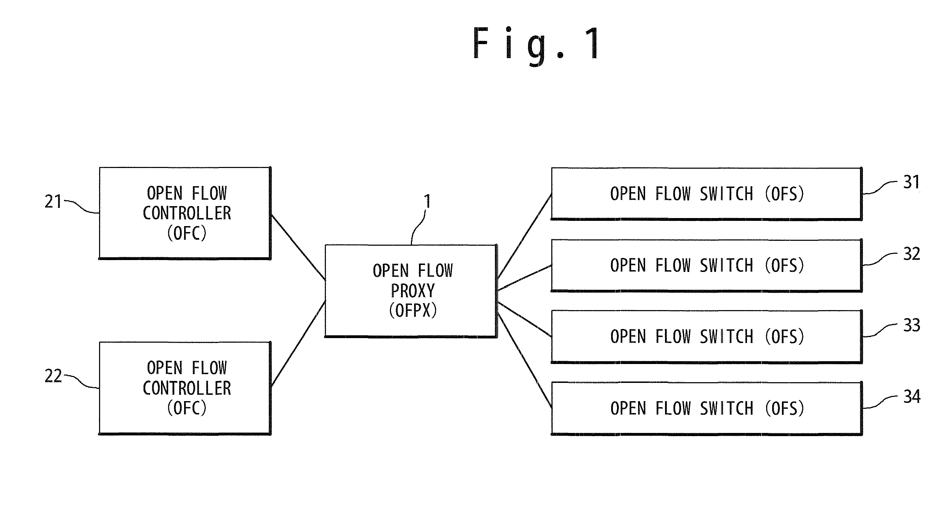

As shown in FIG. 1, a load distribution system of the present invention is provided with an open flow proxy (OpenFlow Proxy: OFPX) 1, open flow controllers (OpenFlow Controllers: OFCs) 21 and 22, and open flow switches (OpenFlow Switches: OFSs) 31 to 34.

The open flow proxy (OFPX) 1 is a proxy which relays communication between the open flow controllers (OFCs) 21 and 22 and the open flow switches (OFSs) 31 to 34. As an example of the open flow proxy (OFPX) 1, a proxy server, a gateway, a firewall, or a computer and a relay unit which are equivalent to them are assumed. However, actually, the present invention is not limited to these examples.

The open flow controllers (OFCs) 21 and 22 are servers, each of which controls and monitors the open flow switches (OFSs) 31 to 34 and sets a delivery route of a packet to the open flow switches (OFSs) 31 to 34. In this case, the setting by a flow switching method which uses the open flow technique will be described. However, actually, it may be set by a static routing method of a transmission destination address (destination IP address) base, and a path routing method of the MPLS (Multi Protocol Label Switching) base. Computers such as a PC (personal computer), a thin client server, a work-station, a mainframe, and a supercomputer are exemplified as the open flow controllers (OFCs) 21 and 22. However, actually, the present invention is not limited to these examples.

The open flow switches (OFSs) 31 to 34 are switches configuring the network and delivering a received packet on a set delivery route. As an example of the open flow switches (OFS) 31 to 34, a network switch, a multi-layer switch, and so on are exemplified. The multi-layer switches are classified in details every layer of the OSI Reference Model to be supported. As a man classification, there are a layer 3 switch which reads data on the network layer (third layer), a layer 4 switch which reads data on the transport layer (fourth layer), and a layer 7 switch (application switch) which reads data on the application layer (seventh layer). It is supposed that the open flow switches (OFSs) 31 to 34 have a function of the layer 3 switch at least. It should be noted that in the opening flow system, a relay unit such as a typical router and a switching hub can be used as the open flow switch (OFS). However, actually, the present invention is not limited to these examples.

It should be noted that although being not shown, there is a case that a server and various types of network compatible equipment exist under each of the open flow switches (OFSs) 31 to 34. For example, a case where each of the open flow switches (OFSs) 31 to 34 is installed in a server rack is thought of. In such a case, the server under each of the open flow switches (OFSs) 31 to 34 is sometimes provided with a virtual machine (VM) and a virtual machine monitor (VMM) in the logic configuration. When the above-mentioned server and the virtual machine communicate with the open flow proxy (OFPX) 1 through the open flow switches (OFSs) 31 to 34, the open flow switches (OFSs) 31 to 34 directly communicates with the open flow proxy (OFPX) 1.

### (Details of components)

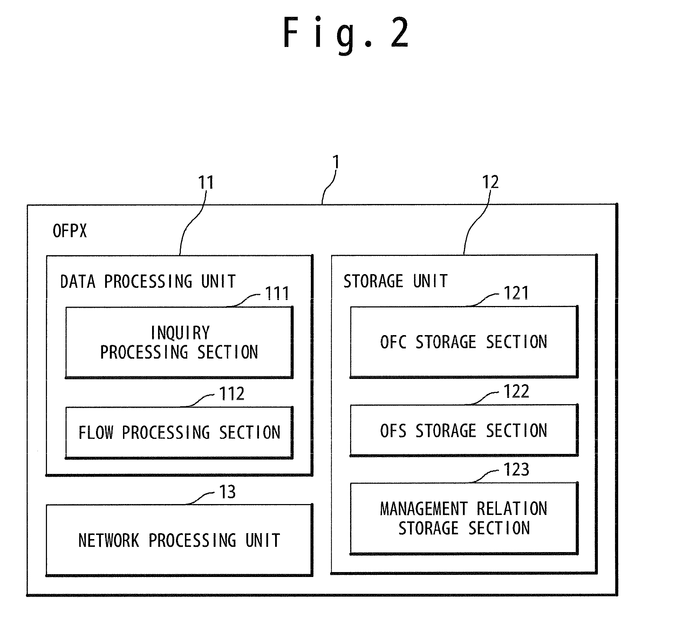

As shown in FIG. 2, the open flow proxy (OFPX) 1 is provided with a data processing unit 11, a storage unit 12 and a network processing unit 13.

The data processing unit 11 is provided with an inquiry processing section 111 and a flow processing section 112.

The inquiry processing section 111 starts when the open flow proxy (OFPX) 1 receives an inquiry message from the open flow switch (OFS), and transfers the inquiry message from the open flow switch (OFS) only to a master open flow controller (OFC) of the open flow controllers (OFCs).

The flow processing section 112 starts when the open flow proxy (OFPX) 1 receives a flow registration message (a route data registration message) for each OFS from the open flow controller (OFC), and transmits the flow registration message by using secure channels which have been established to the open flow switches OFSs as an destination of the flow registration message.

As an example of the data processing unit 11, a microprocessor, a microcontroller, and an IC (Semiconductor Integrated Circuit) which has a similar function are exemplified. However, actually, the present invention is not limited to these examples.

The storage unit 12 is provided with an OFC storage section 121, an OFS storage section 122 and a management relation storage section 123.

The OFC storage section 121 stores the IP addresses of all the open flow controllers (OFCs).

The OFS storage section 122 stores the IP addresses of all the open flow switches (OFSs).

The management relation storage section 123 stores data of the open flow switches (OFSs) managed by the open flow controllers (OFCs).

It should be noted that the IP address is exemplified only. Actually, it is sufficient if it is identification data possible to specify the open flow controller (OFC) and the open flow switches (OFSs) on the network. Also, the storage unit 12 stores a program to make the data processing unit 11 execute predetermined processing according to necessity.

As an example of the storage unit 12, a semiconductor memory device such as RAM (Random Access Memory), ROM (Read Only Memory), EEPROM (Electrically Erasable and Programmable Read Only Memory) and flash memory, an auxiliary storage unit such as HDD (Hard Disk Drive) and SSD (Solid State Drive), storage media such as DVD (Digital Versatile Disk) and a memory card, and so on are exemplified. However, actually, the present invention is not limited to these examples.

The network processing unit 13 transmits and receives data through the network. When receiving an inquiry message from the open flow switch (OFS), the network processing unit 13 starts the inquiry processing section 111. Also, when receiving a flow registration messages for each open flow switch (OFS) from the open flow controller (OFC), the network processing unit 13 starts the flow processing section 112.

As an example of the network processing unit 13, a network adapter such as NIC (Network Interface Card), a communication unit such as an antenna, a communication port such as a connection port (connectors), and so on are exemplified. Also, as an example of the network, the Internet, LAN (Local Area Network), wireless LAN (Wireless LAN), WAN (Wide Area Network), backbone (Backbone), community antenna television system (CATV) line, fixation telephone network, mobile phone network, WiMAX (IEEE 802.16a), 3G (3rd Generation), lease line, IrDA (Infrared Data Association), Bluetooth (registered trademark), serial communication line, data bus and so on are exemplified. However, actually, the present invention is not limited to these examples.

### (Operation)

Next, an operation of the load distribution system of the present invention will be described in detail.

### (Precondition)

As the preparation to attain the present invention, the following condition must be met: 1. Registration of the IP address of the open flow proxy (OFPX) 1 on each open flow switch (OFS) instead of the IP address of the open flow controller (OFC); and 2. Registration of the IP address of the open flow controller (OFC) 21 and that of the open flow controller (OFC) 22 in the OFC storage section 121 of the open flow proxy (OFPX) 1 in advance.

### (Operation when switch starts (initialization))

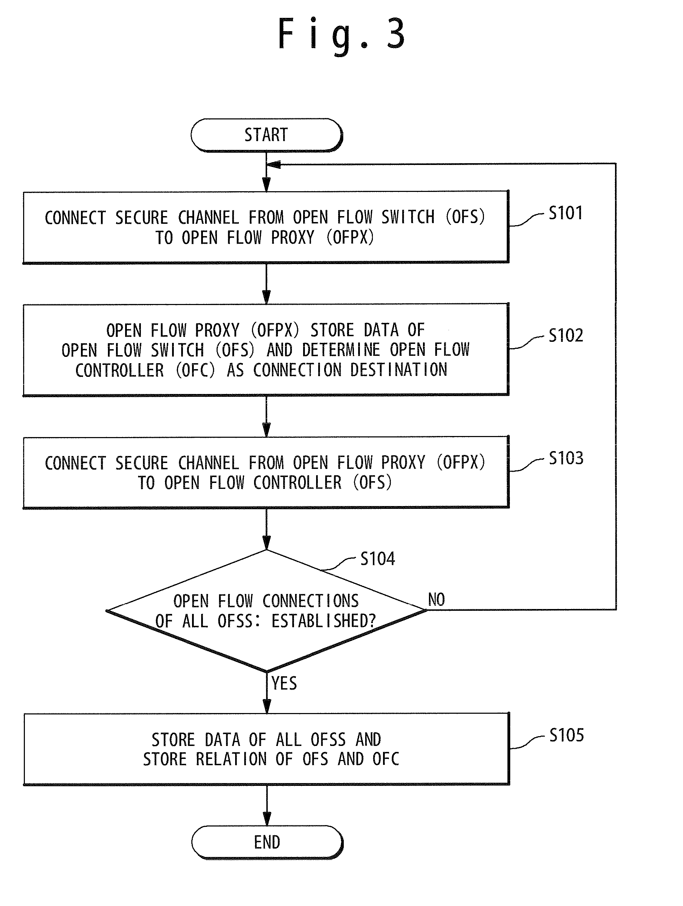

First, an operation in case of the start of the switch will be described with reference to FIG. 3.

### (1) Step S101

When the open flow switch (OFS) 31 starts, each open flow switch (OFS) 31 carries out a secure channel connection (SecChan connection) based on the open flow protocol to the IP address which is stored as the IP address of the open flow controller (OFC) previously. Here, the connection destination of the open flow switch (OFS) 31 is the open flow proxy (OFPX) 1. That is, the open flow switch (OFS) 31 stores the IP address of the open flow proxy (OFPX) 1 as the address of the open flow controller (OFC).

### (2) Step S102

When receiving establishment of the secure channel connection from the open flow switch (OFS) 31, the open flow proxy (OFPX) 1 stores the data (IP address and so on) of the open flow switch (OFS) 31 in the OFS storage section 122. Also, the open flow proxy (OFPX) 1 determines a master open flow controller (OFC) for the open flow switch (OFS) 31 from the data of the open flow controllers (OFCs) stored in the OFC storage section 121, and stores a correspondence relation between the open flow switch (OFS) 31 and the determined master open flow controller (OFC) in the management relation storage section 123. Here, it is supposed that the open flow controller (OFC) 21 is selected as the master OFC to the open flow switch (OFS) 31.

### (3) Step S103

The open flow proxy (OFPX) 1 carries out the secure channel connection (SecChan connection) according to the open flow protocol to connect the open flow switch (OFS) 31 to the open flow controller (OFC) 21 and the open flow controller (OFC) 22, and establishes an open flow protocol connection to the open flow switch (OFS) 31.

### (4) Step S104

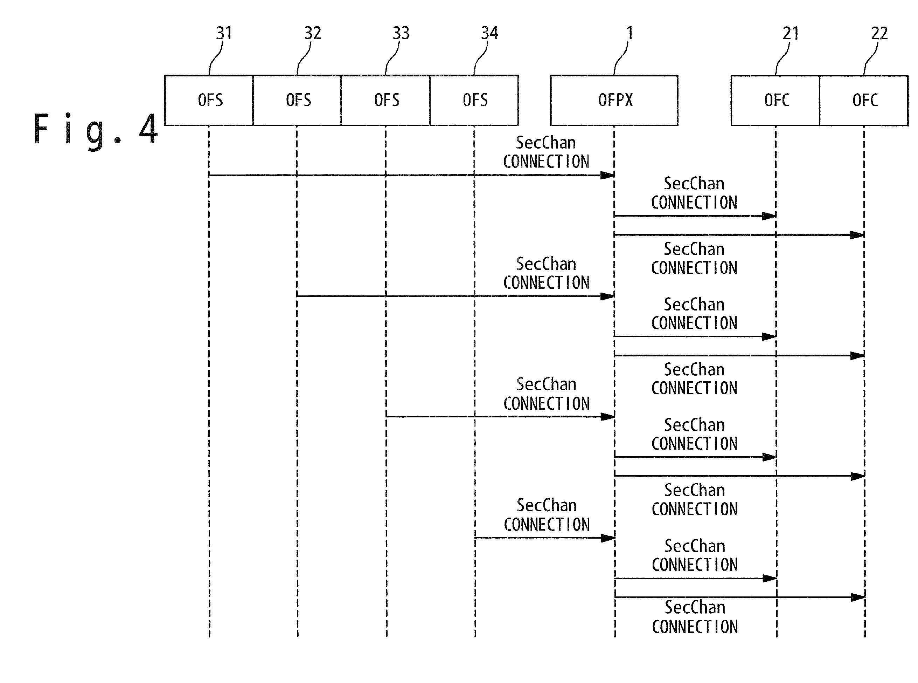

In the same way, the open flow proxy (OFPX) 1 establishes the open flow protocol connections of all the open flow switches (OFSs). That is, as shown in FIG. 4, the open flow proxy (OFPX) 1 establishes the open flow protocol connection of the open flow switch (OFS) 32, the open flow switch (OFS) 33, and the open flow switch (OFS) 34, like the open flow switch (OFS) 31. In this case, the open flow proxy (OFPX) 1 carries out the secure channel connections to the open flow controller (OFC) 21 and the open flow controller (OFC) 22 in accordance with the open flow protocol, as if being the connection from each of the open flow switch (OFS) 32, the open flow switch (OFS) 33 and the open flow switch (OFS) 34.

### (5) Step S105

After the establishment of the open flow protocol connections of all the open flow switches (OFSs) is complete, the open flow proxy (OFPX) 1 stores the data (IP addresses and so on) of all the open flow switches (OFSs) in the OFS storage section 122. Also, the open flow proxy (OFPX) 1 determines the master open flow controller (OFC) to each of the open flow switch (OFS) 32, the open flow switch (OFS) 33 and the open flow switch (OFS) 34 from the data of the open flow controllers (OFCs) stored in the OFC storage section 121, and stores the correspondence relation to the master open flow controller (OFC) in the management relation storage section 123 every open flow switch (OFS).

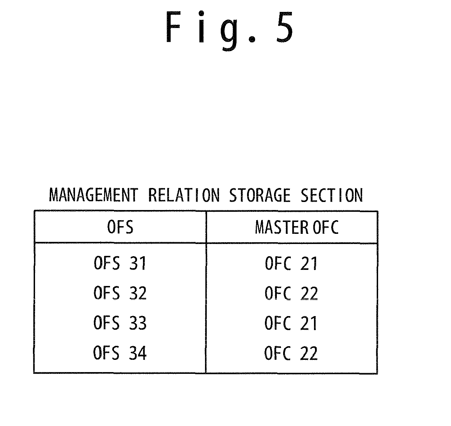

Here, it is supposed that the open flow proxy (OFPX) 1 stores data of the correspondence relation shown in FIG. 5 in the management relation storage section 223. That is, the open flow proxy (OFPX) 1 stores in the management relation storage section 123, the master open flow controller (OFC) to the open flow switch (OFS) 31 and the open flow switch (OFS) 33 as the open flow controller (OFC) 21, and the master open flow controller (OFC) to the open flow switch (OFS) 32 and the open flow switch (OFS) 34 as the open flow controller (OFC) 22.

### (Operation of routing control)

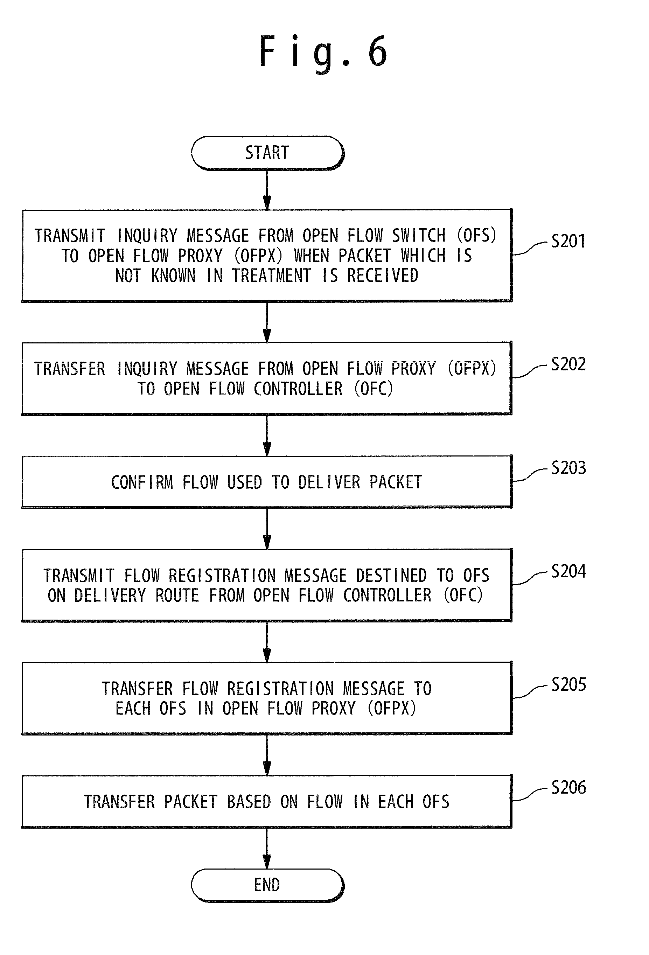

Next, an operation of the routing control will be described with reference to FIG. 6.

### (1) Step S201

When receiving a packet which is unclear in a processing method, the open flow switch (OFS) 31 transmits the inquiry message to the open flow proxy (OFPX) 1 through the network based on the open flow protocol, to inquire the processing method of the packet. It should be noted that like the packet (first packet) received for the first time, the packet unclear in the processing method (or not known in treatment) is a packet of an unregistered flow which does not match to any of the entries registered on the flow table.

### (2) Step S202

When receiving the inquiry message from the open flow switch (OFS) 31, the network processing unit 13 of the open flow proxy (OFPX) 1 starts the inquiry processing section 111. The inquiry processing section 111 refers to the management relation storage section 123 to transfer the inquiry message from the open flow switch (OFS) 31 to only the open flow controller open flow controller (OFC) 21 to the open flow switch (OFS) 31.

### (3) Step S203

When receiving the inquiry message, the open flow controller (OFC) 21 confirms a flow used to deliver the packet of the inquiry target. In this case, it is supposed that the open flow controller (OFC) 21 determines that a flow has to be registered to deliver the inquiry target packet on the route of the open flow switch (OFS) 31 • the open flow switch (OFS) 33 • the open flow switch (OFS) 34.

### (4) Step S204

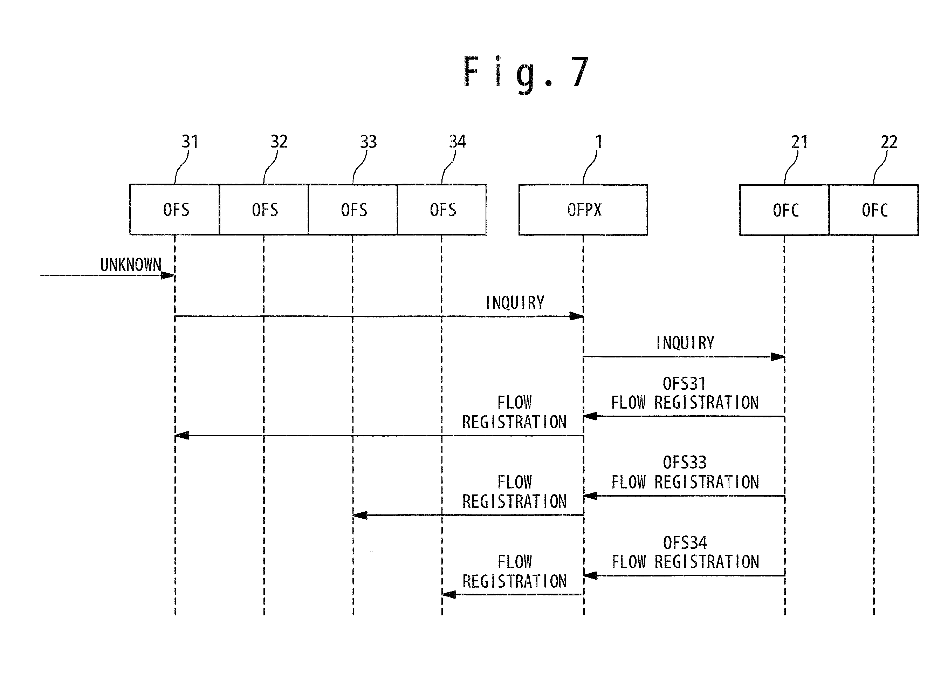

As shown in FIG. 7, the open flow controller (OFC) 21 uses the secure channel connection, which has been established to the open flow proxy (OFPX) 1, with the open flow switch (OFS) 31, the open flow switch (OFS) 33, and the open flow switch (OFS) 34, and transmits a flow registration message having each open flow switch (OFS) as a destination. It should be noted that actually, the open flow controller (OFS) 21 may collectively transmit to the open flow proxy (OFPX) 1, the flow registration message having each open flow switch (OFS) as the destination.

### (5) Step S205

When receiving the flow registration message for each open flow switch (OFS) from the open flow controller (OFC) 21, the network processing unit 13 of the open flow proxy (OFPX) 1 starts the flow processing section 112. The flow processing section 112 uses the secure channel established to the OFS as the destination of the flow registration message and transmits the flow registration message. As shown in FIG. 7, in this case, the flow processing section 112 transmits the flow registration message to each of the open flow switch (OFS) 31, the open flow switch (OFS) 33 and the open flow switches (OFS) 34.

### (6) Step S206

When receiving the flow registration message, each of the open flow switch (OFS) 31, the open flow switch (OFS) 33 and the open flow switch (OFS) 34 registers a flow, and transfers a packet with the same pattern as the inquiry target packet based on the flow. In this case, the open flow switch (OFS) 31 transfers the packet with the same pattern as the inquiry target packet to the open flow switch (OFS) 33. The open flow switch (OFS) 33 transfers the packet to the open flow switch (OFS) 34.

Subsequently, each open flow switch (OFS) can deliver the packet with the same pattern.

In the same way, when the open flow switch (OFS) 32 receives a packet unclear in the processing method (not known in treatment), an inquiry message is transferred from the open flow switch (OFS) 32 to the open flow controller (OFC) 22 by the open flow proxy (OFPX) 1, and the open flow controller (OFC) 22 registers a flow according to necessity.

### (Example of session of secure channel)

Next, an example of the session of the secure channel will be described.

Here, the expression is simplified as follows:
"OFPX" shows the open flow proxy (OFPX) 1,
"OFC" shows the open flow controller (OFC) 21 or 22, and
"OFS" shows any of the open flow switches (OFSs) 31 to 34.

In the secure channel between each open flow switch (OFS) and the open flow proxy (OFPX) 1, a source address (transmission side address) of the packet transmitted from the open flow switch (OFS) to the open flow proxy (OFPX) 1 is an IP address of the open flow switch (OFS), and a destination address (reception side address) is an IP address of open flow proxy (OFPX) 1. Also, the source address of the packet transmitted from the open flow proxy (OFPX) 1 to the open flow switch (OFS) is an IP address of the open flow proxy (OFPX) 1 and a destination address thereof is an IP address of the open flow switch (OFS).

The packet transmitted from the open flow proxy to the open flow switch (OFS) is one which relays the packet transmitted from the open flow controller (OFC) to the open flow switch (OFS). Here, because the open flow switch (OFS) is using the secure channel with the open flow proxy (OFPX), it is necessary that the open flow proxy (OFPX) 1 has an IP address of the open flow proxy (OFPX) as the source address of a message transmitted from the open flow controller (OFC) to the open flow switch (OFS).

In the secure channel between the open flow proxy (OFPX) 1 and each open flow controller (OFC), the source address of the packet transmitted from the open flow proxy (OFPX) 1 to the open flow controller (OFC) is the IP address of the open flow switch (OFS), and the destination address thereof is the IP address of the open flow controller (OFC). Also, the source address of the packet transmitted from the open flow controller (OFC) to the open flow proxy (OFPX) is the IP address of the open flow controller (OFC) and the destination address thereof is the IP address of the open flow switch (OFS).

A packet transmitted from the open flow proxy (OFPX) 1 to the open flow controller (OFC) relays a communication between the open flow switch (OFS) and the open flow controller (OFC). Because the open flow controller (OFC) is necessary to recognize that a message from the open flow switch (OFS) is received, the source address must be the address of the open flow switch (OFS). In the same way, because the open flow proxy (OFPX) 1 must recognize that the packet transmitted from the open flow controller (OFC) to the open flow proxy (OFPX) 1 is a message for any of the open flow switches (OFSs), the destination address must be the address of the open flow switch (OFS). Therefore, the open flow proxy (OFPX) 1 must be a gateway in case of communication from the open flow controller (OFC) to the open flow switch (OFS).

### (Implementation result)

In the present exemplary embodiment, the open flow controller (OFC) is determined to select a delivery route every open flow switch (OFS) of the flow inquiry source, and the open flow controller (OFC) can be subjected to the load distribution.

On the other hand, each open flow switch (OFS) and the open flow controller (OFC) operate according to the open flow protocol, and special processing is unnecessary to interpose the open flow proxy (OFPX) 1.

Because the processing of the open flow proxy (OFPX) 1 is simple to transfer the inquiry message from each open flow switch (OFS) to the open flow controller (OFC) based on a correspondence table, and to transfer a message from the open flow controller (OFC) to the open flow switch (OFS) of the destination of the message, it is possible to realize the open flow proxy (OFPX) 1 with a cheap hardware configuration.

According to the present invention, it is possible to control an open flow switch (OFS) group by a plurality of open flow controllers (OFCs). The reason is in that a single open flow controller (OFC) seems to exist from all the open flow switches (OFSs) due to the intervention of the proxy, and the connections with all the open flow switches (OFSs) seem to be established to all the open flow controllers (OFCs).

### [Second Exemplary Embodiment]

Next, the second exemplary embodiment of the present invention will be described with reference to the accompanying drawings.

One feature of the present exemplary embodiment is in that the data processing unit 11 of the open flow proxy (OFPX) 1 contains an existence confirmation processing section 113.

### (Configuration of whole system)

The whole configuration of the load distribution system is as shown in FIG. 1.

### (Details of components)

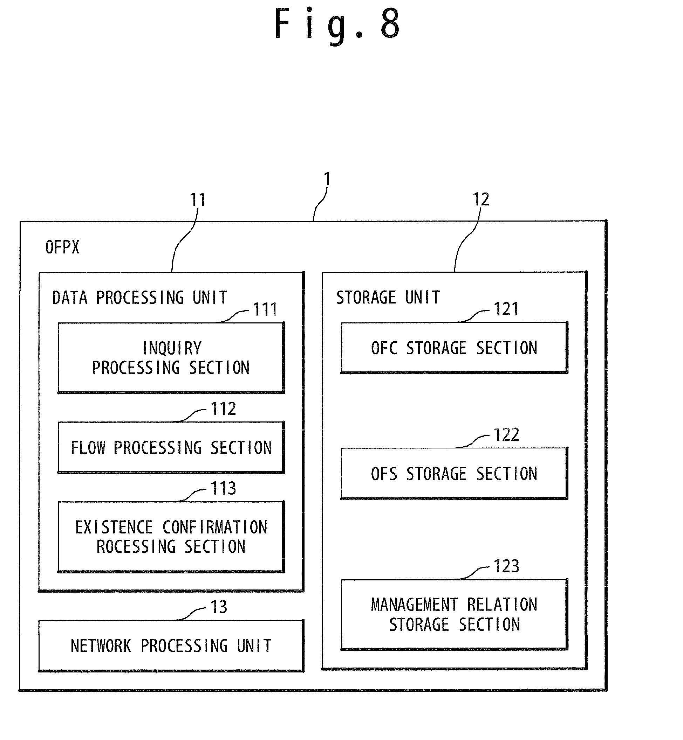

As shown in FIG. 8, the open flow proxy (OFPX) 1 of the second exemplary embodiment is provided with the data processing unit 11, the storage unit 12 and the network processing unit 13.

The storage unit 12 and the network processing unit 13 are basically the same as those of the first exemplary embodiment.

The data processing unit 11 of the second exemplary embodiment is provided with the inquiry processing section 111, the flow processing section 112 and an existence confirmation processing section 113.

The inquiry processing section 111 and the flow processing section 112 are basically the same as those of the first exemplary embodiment.

The existence confirmation processing section 113 monitors the open flow controller (OFC) 21 and the open flow controller (OFC) 22 and detects that a fault has occurred.

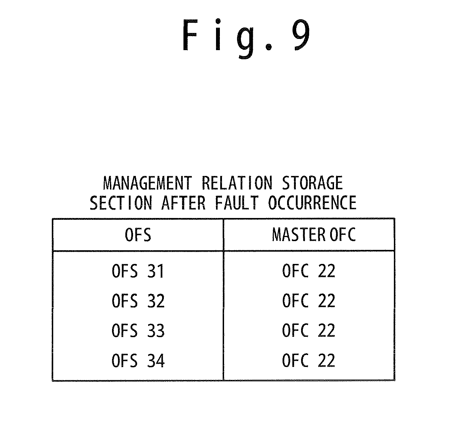

In this case, it is supposed that the fault has occurred in the open flow controller (OFC) 21 under the condition that the data of FIG. 5 is stored in the management relation storage section 123. When detecting the fault of the open flow controller (OFC) 21, the existence confirmation processing section 113 changes the master open flow controller (OFC) of the entry in which the master open flow controller (OFC) is the open flow controller (OFC) 21, to another open flow controller (OFC) in the management relation storage section 123. In this example, the existence confirmation processing section 113 changes the master open flow controller (OFC) to the open flow switch (OFS) 31 and the open flow switch (OFS) 33 from the open flow controller (OFC) 21 to the master opening flow controller (OFC) 22. In this case, the contents in the management relation storage section 123 are as shown in FIG. 9.

Subsequently, the inquiry message transmitted to the open flow controller (OFC) 21 from the open flow switch (OFS) 31 and the open flow switch (OFS) 33 is transmitted to the open flow controller (OFC) 22 in which any fault has not occurred.

The open flow proxy (OFPX) 1 continues the monitoring of the open flow controller (OFC) 21. When detecting the restoration of the open flow controller (OFC) 21, the open flow proxy (OFPX) 1 updates the management relation storage section 123, and resumes the load distribution of the open flow controllers (OFCs). In this example, the existence confirmation processing section 113 switches the master open flow controller (OFC) to the open flow switch (OFS) 31 and the open flow switch (OFS) 33 from the open flow controller (OFC) 22 to the master opening flow controller (OFC) 21.

### (Implementation result)

In the second exemplary embodiment, because the switching operation when the fault has occurred in the open flow controller (OFC) completes only by the update of the correspondence relation of the master open flow controller (OFC) every open flow switch (OFS) stored in the management relation storage section, it is possible to switch in short time.

It should be noted that the above-mentioned exemplary embodiments can be combined.

### (Field to which the present invention is possibly applied)

As described above, the present invention can be applied to a technical field in which performance improvement and fault-tolerance of a large scale network are desired.

### (Summary)

As mentioned above, in the load distribution system of the present invention, the open flow proxy (OFPX) notifies an open flow protocol connection from one open flow switch (OFS) to a plurality of open flow controllers (OFCs) and transfers an inquiry message from the open flow switch (OFS) only to a master open flow controller of the open flow controllers (OFCs).

Also, the open flow proxy (OFPX) transfers flow registration messages from the plurality of opening flow controllers (OFCs) to open flow protocol connection sessions of the open flow switches (OFSs).

In the above, the present invention has been described, by using the open flow technique as an example. However, the present invention can be applied to a similar technique except the open flow technique.

### (Supplemental note)

A part or whole of the above-mentioned exemplary embodiments can be described as in the following supplemental notes. However, actually, the present invention is not limited to the following examples.

### (Supplemental note 1)

A storage medium which stores a program which is executed by a proxy which is provided between switches of a network and controllers which set a route to the switches, wherein the program executed by the proxy, includes:
a step of notifying a connection from one switch to the plurality of controllers; and
a step of transferring an inquiry message from the switch to the master controller.

### (Supplemental note 2)

The storage medium according to Supplemental note 1, wherein the program further includes:
a step of determining the master controller as a connection destination when receiving a secure channel connection of the protocol from one switch;
a step of carrying out the secure channel connection to said master controller; and
a step of establishing a connection between said master controller and said switch.

### (Supplemental note 3)

The storage medium according to Supplemental note 1 or 2, wherein the program further includes:
a step of transferring a route data registration message from the plurality of controllers to one connection session of the switch.

### (Supplemental note 4)

The storage medium according to any of Supplemental notes 1 to 3, wherein the program further includes:
a step of transferring an inquiry message from the switch which received a packet which is unclear in a processing method to said master controller;
a step of determining the switch as a destination of the route data registration message when receiving the route data registration message from the master controller in response to the inquiry message; and
a step of transferring the route data registration message to all the switches as a destination.

### (Supplemental note 5)

The storage medium according to any of Supplemental notes 1 to 4, wherein the program further includes:
a step of retaining correspondence relation between the switch and the controller;
a step of monitoring the switch and the controller;
a step of changing the correspondence relation between the switch and the controller when detecting that a fault has occurred.

The exemplary embodiments of the present invention have been described in detail. However, actually, the present invention is not limited to the above-mentioned exemplary embodiments. Various modifications which do not deviate from the present invention are contained in the present invention.

It should be noted that this patent application claims a priority based on Japan Patent Application No. JP 2009-269005. The disclosure thererof is incorporated herein by reference.

## Claims

1. A load distribution system comprising:
switches which configures a network;
controllers, either of which is configured to set a route to said switches; and
a proxy configured to notify a connection from one of said switches to said controllers, and transfer an inquiry message from said switch to a master controller as one of said controllers.

2. The load distribution system according to claim 1, wherein said proxy determines said master controller as a connection destination, when receiving a secure channel connection according to a protocol from said switch and carries out the secure channel connection to said master controller, and establishes a connection between said master controller and said switch.

3. The load distribution system according to claim 1 or 2, wherein said proxy transfers route data registration messages from said controllers to a connection session of one of said switches.

4. The load distribution system according to any of claims 1 to 3, wherein said proxy transfers the inquiry message from said switch which has received a packet unclear in a processing method, to said master controller, determines ones of said switches as a destination of a route data registration message, when receiving the route data registration message from said master controller in a response to the inquiry message, and transfers the route data registration message to the determined switches.

5. The load distribution system according to any of claims 1 to 4, wherein said proxy stores correspondence relation between said switch and said controller, monitors said switches and said controllers, and changes the correspondence relation between said switch and said controller when detecting that a fault has occurred in either of said switch and said controller.

6. The proxy which is used in the load distribution system according to any of claims 1 to 5.

7. A load distribution method comprising:
setting a route to switches which configure a network by a master one of controllers;
notifying a connection from one of said switches to said controllers by a proxy; and
transferring an inquiry message from said switch to said master controller by said proxy.

8. The load distribution method according to claim 7, further comprising:
determining said master controller as a connection destination by said proxy, when receiving a secure channel connection according to a protocol from one of said switches; and
carrying out the secure channel connection to said master controller, by said proxy to establish a connection between said master controller and said switch.

9. The load distribution method according to claim 7 or 8, further comprising:
transferring route data registration messages from said controllers to connection session of one of said switches, by said proxy.

10. The load distribution method according to any of claims 7 to 9, further comprising:
transferring the inquiry message from one of said switches which has received a packet unclear in a processing method, to said master controller, by said proxy;
determining ones of said switches as a destination of a route data registration message by said proxy when receiving the route data registration message from said master controller in response to the inquiry message; and
transferring the route data registration message to all the determined switches as the destination by said proxy.

11. The load distribution method according to any of claims 7 to 10, further comprising:
retaining correspondence relation between said switch and said controller by said proxy;
monitoring said switch and said controller by said proxy; and
changing the correspondence relation between said switch and said controller when detecting that a fault has occurred in either of said switch and said controller.

12. A storage medium which stores a program to make a proxy execute a load distribution method according to any of claims 7 to 11.
